# EUROPÄISCHE PATENTANMELDUNG

(11) **EP 4 484 795 A1**
(43) Veröffentlichungstag der Anmeldung: **01.01.2025**
(21) Anmeldenummer: 24183633.7
(22) Anmeldetag: 21.06.2024
(51) Int. Cl.: F16G 15/04, F16G 15/12

(54) **KETTENSCHLOSS FÜR EINE GLIEDERKETTE SOWIE SICHERUNGSBOLZEN FÜR EIN SOLCHES KETTENSCHLOSS**

(30) Priorität: 29.06.2023 DE 202023103614 U
(71) Anmelder: J.D. Theile GmbH & Co. KG, D-58239 Schwerte (DE)
(72) Erfinder: ROLING, Franz, 59394 Nordkirchen (DE); MERTENS, Wilfried, 44534 Lünen (DE)
(74) Vertreter: Haverkamp Patentanwälte PartG mbB

(57) **Zusammenfassung**

Beschrieben ist ein Kettenschloss 1 für eine Gliederkette mit zwei in Zugbelastungsrichtung des Kettenschlosses 1 formschlüssig miteinander in Eingriff gestellten Schlossteilen 2, 3 und mit einem Sicherungsbolzen 6, der, in Querrichtung zur Ebene der Flachseite des Kettenschlosses 1 montiert, in einander gegenüberliegende Sitze 7, 8 der beiden Schlossteile 1, 2 eingreift. Der Sicherungsbolzen 6 weist ein erstes und ein zweites Bolzenglied 15, 16 auf. Jedes Bolzenglied 15, 16 weist einen in Querrichtung zur Ebene der Flachseite des Kettenschlosses 1 mit einer Anschlagfläche 14, 14.1 des Sicherungsbolzensitzes zusammenwirkenden Anschlag 19 auf.

## Beschreibung

Die Erfindung betrifft ein Kettenschloss für eine Gliederkette mit zwei in Zugbelastungsrichtung des Kettenschlosses formschlüssig miteinander in Eingriff gestellten Schlossteilen, die an ihren zueinander weisenden, den Innenraum des Kettenschloss begrenzenden Innenseiten jeweils einen Sitz mit einer in Querrichtung zur Ebene der Flachseite des Kettenschlosses wirkenden Anschlagfläche für einen darin eingesetzten Sicherungsbolzen aufweisen, und mit einem solchen Sicherungsbolzen, der, in Querrichtung zur Ebene der Flachseite des Kettenschlosses montiert, in die einander gegenüberliegenden Sitze der beiden Schlossteile zum Verriegeln derselben eingreift, welcher Sicherungsbolzen ein erstes und ein zweites Bolzenglied aufweist, die, von gegenüberliegenden Flachseiten des Kettenschlosses montiert, miteinander verbunden sind und von denen jedes Bolzenglied einen in Querrichtung zur Ebene der Flachseite des Kettenschlosses mit einer Anschlagfläche des Sicherungsbolzensitzes zusammenwirkenden Anschlag aufweist.

Die Erfindung betrifft ferner einen Sicherungsbolzen für ein Kettenschloss für eine Gliederkette mit zwei in Zugbelastungsrichtung des Kettenschlosses formschlüssig miteinander in Eingriff gestellten Schlossteilen, die an ihren zueinander weisenden, den Innenraum des Kettenschloss begrenzenden Innenseiten jeweils einen Sitz mit einer in Querrichtung zur Ebene der Flachseite des Kettenschlosses wirkenden Anschlagfläche für einen darin eingesetzten Sicherungsbolzen aufweisen, welcher Sicherungsbolzen ein erstes und ein zweites Bolzenglied aufweist, die miteinander verbunden sind und von denen jedes Bolzenglied einen in Querrichtung zur Ebene der Flachseite des Kettenschlosses mit einer Anschlagfläche des Sicherungsbolzensitzes zusammenwirkenden Anschlag aufweist.

Derartige Schlösser werden zum Verbinden von zwei Kettengliedsträngen verwendet, insbesondere solche Kettengliedstränge, die hohen Zugbelastungen ausgesetzt sind, wie beispielsweise Fördererketten. Ein derartiges, auch als Flachschloss bezeichnetes Kettenschloss verfügt über zwei Schlossteile. Diese sind typischerweise identisch und bezüglich des Mittelpunktes des Kettenschlosses symmetrisch zueinander angeordnet. Die Teilung der Schlossteile kann bei einem solchen Kettenschloss innerhalb der die Bögen verbindenden Schenkel vorgesehen sein. Die Teilungsebene ist gegenüber der Langachse des Kettengliedes geneigt und erstreckt sich typischerweise über die gesamte Länge der Schenkel. An ihren zueinander weisenden Seiten sind die Schenkelteile der beiden Schlossteile klauenartig strukturiert, sodass bei geschlossenem Kettenschloss beide Schlossteile in Zugbelastungsrichtung des Kettenschlosses formschlüssig miteinander in Eingriff gestellt sind. Zum Sichern der beiden Schlossteile gegen ein Lösen werden Sicherungsbolzen verwendet, durch die eine Relativbewegung der beiden Schlossteile zum Lösen derselben voneinander blockiert ist. Die beiden Schlossteile verfügen zur Anordnung des Sicherungsbolzens jeweils über einen zu dem Schenkelteil des jeweils anderen Schlossteiles weisenden Sicherungsbolzensitz. Die beiden Sicherungsbolzensitze der beiden Schlossteile ergänzen sich zu einem Sitz, in den der Sicherungsbolzen in Querrichtung zur Flachseite des Kettenschlosses montiert wird. Diese Sitze sind vom Grundsatz her konkave Ausnehmungen in den zueinander weisenden Schenkelteilen. Durch den eingesetzten Sicherungsbolzen ist sowohl eine Bewegung in Längserstreckung des Kettenschlosses blockiert als auch in den Querrichtungen dazu.

Ein solches Kettenschloss ist beispielsweise aus DE 20 2015 101 618 U1 bekannt. Der Sicherungsbolzen dieses vorbekannten Kettenschlosses verfügt über zwei Bolzenglieder. Die Bolzenglieder werden von gegenüberliegenden Flachseiten in den kettenschlossseitigen Sitz eingebracht. Die beiden Bolzenglieder sind mit Ihren zueinander weisenden Stirnseiten auf Stoß zueinander angeordnet und durch Sicherungsstifte miteinander verbunden. Ein äußerer Sicherungsstift greift mit einem entsprechenden radial außenseitigen Vorsprung formschlüssig in entsprechend ausgebildete Innenausnehmungen der Bolzenglieder ein. Ein zusätzlicher innerer Sicherungsstift sichert die vorbeschriebene Eingriffsstellung.

Aus DE 10 2020 121 972 ist ein weiteres Kettenschloss der vorstehend beschriebenen Art bekannt. Der Sicherungsbolzen dieses Standes der Technik ist einstückig ausgeführt. Dieser Sicherungsbolzen trägt zumindest ein in radialer Richtung aufweitbares Federelement. Dieses zumindest eine Federelement sitzt in einer umlaufenden Nut des Sicherungsbolzens. In den Nutenboden sind Durchbrechungen eingebracht, die diese mit einem Axialkanal des Sicherungsbolzens verbinden. Bei diesem Sicherungsbolzen sind zwei einander diametral zur Längsachse gegenüberliegende Durchbrechungen vorgesehen. In jeder Durchbrechung sitzt eine Kugel, deren Durchmesser größer ist als die Materialstärke des Sicherungsbolzens. Diesem Kettenschloss zugehörig ist des Weiteren ein Sicherungsstift, der zum Aktivieren der Druckkugeln in den Axialkanal eingetrieben wird. Dadurch werden die Kugeln in radialer Richtung nach außen gedrückt und der zumindest eine Federring aufgeweitet. Komplementär zu der Mantelfläche des oder der Federelemente ist in den Sicherungsbolzensitz der Schlossteile jeweils eine Nut eingebracht, in die das zumindest eine Federelement, wenn in seine Verriegelungsstellung gebracht, eingreift. Bei diesem Kettenschloss ist zu beachten, dass der Sicherungsbolzen in einer definierten Orientierung zwischen die beiden Sicherungsbolzensitze eingesetzt wird. Dabei müssen die Druckkugeln gegen die Sitze der Schlossteile wirken. Entsprechend verfügt ein solches Kettenschloss über Elemente, die ein lagerichtiges Einsetzen in den Sicherungssitz gewährleisten sollen. Nachteilig bei einem Kettenschloss, bei dem ein Verriegelungskörper, wie etwa der zumindest eine vorgenannte Federring, in eine Ausnehmung des Sitzes der Schlossteile eingebracht wird, ist dass im Falle von Korrosionserscheinungen zwischen dem Eingriffselement und dem Sitz ein Öffnen des Kettenschlosses mitunter nicht oder nur noch unter erschwerten Bedingungen möglich ist.

Ein weiteres Kettenschloss ist aus DE 101 60 767 A1 bekannt. Dieses Kettenschloss verfügt als Sicherungsbolzen über drei Elemente, und zwar eine äußere Verriegelungshülse, die mit ihrer äußeren Mantelfläche an dem Sitz der Schlossteile anliegt, ein typischerweise aus Kunststoff hergestelltes Passelement, welches in Einsetzrichtung formschlüssig mit der Verriegelungshülse in Eingriff gestellt ist und einem Passbolzen, der in das Passelement eingetrieben ist und eine in radialer Richtung wirkende Verformung des Passelementes verhindert. Vorteilhaft ist bei diesem Kettenschloss, dass sich dieses auch nach längerer Standzeit in einem aggressiven Milieu leicht öffnen lässt. Bei diesem vorbekannten Kettenschloss erfolgt die Trennung der beiden Schlossteile im Bereich der Bögen.

Ausgehend von dem vorstehend diskutierten Stand der Technik liegt der Erfindung die Aufgabe zugrunde, ein Kettenschloss der eingangs genannten Art sowie einen Sicherungsbolzen eines solchen Kettenschlosses dergestalt weiterzubilden, dass sich dieses auch für Kettenschlösser mit Teilungsebenen in den Schenkeln der Schlossteile eignet und der Sicherungsbolzen auch dann ausgetrieben werden kann, wenn das Kettenschloss in korrosivem Milieu eingesetzt worden ist.

Gelöst wird diese Aufgabe erfindungsgemäß durch ein eingangs genanntes, gattungsgemäßes Kettenschloss, bei dem sich das erste Bolzenglied ausgehend von seinem mit der Anschlagfläche des Sicherungsbolzensitzes zusammenwirkenden Anschlag über die weitere Anschlagfläche des Sicherungsbolzensitzes hinaus erstreckt und der über die zweite Anschlagfläche hinaus erstreckende Abschnitt als Anschlussabschnitt zum Anschließen des zweiten Bolzengliedes vorgesehen ist, dass das erste Bolzenglied einen Axialkanal aufweist, dass in den Anschlussabschnitt des ersten Bolzengliedes mehrere, in radialer Richtung verstellbare jeweils in einer in den Axialkanal mündenden Durchbrechung angeordnete Druckkörper gehalten sind, deren radiale Erstreckung größer ist als die radiale Erstreckung einer solchen Druckkörperdurchbrechung, dass das zweite Bolzenglied zumindest in seinem Anschlussabschnitt als auf den Anschlussabschnitt des ersten Bolzengliedes aufschiebbare Hülse ausgeführt ist und dass in den Axialkanal ein Sicherungsstift eingesetzt ist, durch den bei montiertem zweiten Bolzenglied die Druckkörper in radialer Richtung zum Verspannen derselben in radialer Richtung mit dem zweiten Bolzenglied unter Vorspannung und/oder formschlüssig mit der nach innen weisenden Mantelfläche des zweiten Bolzengliedes in Eingriff gestellt sind.

Gelöst wird diese Aufgabe auch durch einen Sicherungsbolzen mit den Merkmalen des Anspruchs 14.

Bei diesem Kettenschloss - entsprechendes gilt gleichermaßen für den beanspruchten Sicherungsbolzen - werden die beiden Bolzenglieder von gegenüberliegenden Seiten zum Verriegeln der beiden Schlossteile miteinander montiert. Beide Bolzenglieder verfügen über einen zu dem jeweils anderen Bolzenglied weisenden Anschlag, der mit jeweils einer durch den beziehungsweise die Sicherungsbolzensitze bereitgestellten Anschlagfläche zusammenwirkt. Da die beiden Bolzenteile bei geschlossenem Kettenschloss miteinander verbunden sind, ist auf diese Weise der Sicherungsbolzen in dem Sicherungsbolzensitz in Querrichtung zur Ebene des Kettenschlosses formschlüssig gehalten, sodass die beiden Schlossteile in dieser Richtung nicht gegeneinander verstellt werden können, allenfalls mit einem gewissen tolerablen Spiel. Zum Erzielen eines Formschlusses mit dem Sicherungsbolzensitz des Kettenschlosses ist aufgrund er vorgeschriebenen mehrteiligen Auslegung des Sicherungsbolzens mit seinen beiden Bolzengliedern das Einbringen einer Verriegelungskontur in eine Ausnehmung des Sicherungsbolzensitzes nicht erforderlich. Zum Verbinden der beiden Bolzenglieder miteinander, verfügt das erste Bolzenglied über einen Anschlussabschnitt, auf den das zumindest in seinem Anschlussabschnitt nach Art einer Hülse ausgebildete zweite Bolzenglied aufsetzbar ist. Zum Fixieren des zweiten Bolzengliedes auf beziehungsweise an dem Anschlussabschnitt des ersten Bolzengliedes dienen mehrere, in dem Anschlussabschnitt des ersten Bolzengliedes gehaltene Druckkörper. Diese sitzen jeweils in einer Druckkörperdurchbrechung des Anschlussabschnittes und können durch einen Sicherungsstift aktiviert werden, um unter Vorspannung stehend gegen die innere Mantelfläche des Anschlussabschnittes des zweiten Bolzengliedes wirken und/oder um, in eine komplementäre Ausnehmung des zweiten Bolzengliedes eingreifend, einen Formschluss erstellen zu können. Auf diese Weise ist das zweite Bolzenglied in Querrichtung zur Ebene des Kettenschlosses sicher und dauerhaft mit dem ersten Kettenglied verbunden. Ein Austreiben des Sicherungsbolzens zum Öffnen des Kettenschlosses ist, auch wenn das Kettenschloss in einem korrosiven Milieu eingesetzt worden ist trotz vorhandener, durchaus auch massiver Korrosionserscheinungen unproblematisch. Ein Austreiben des Sicherungsstiftes ist ohne Weiteres möglich. Selbst wenn die Druckkörper durch Korrosion mit dem zweiten Bolzenglied verbunden sind, kann unter Ausnutzung des Anschlages des zweiten Bolzengliedes an der komplementären Anschlagfläche des Sicherungsbolzensitzes das erste Bolzenglied aus dem Sicherungsbolzensitz herausgeschlagen werden. Gegebenenfalls vorhandene korrosive Verbindungen zwischen einzelnen oder allen Druckkörpern mit dem zweiten Bolzenglied können eine solche Trennung der beiden Bolzenglieder nicht verhindern. Die korrosive Verbindung wird durch einen Schlag zum Austreiben des ersten Bolzengliedes aus dem Sicherungsbolzensitz gelöst. Nach Austreiben des ersten Bolzengliedes kann auch das zweite Bolzenglied aus dem Sicherungsbolzensitz entfernt und die beiden Schlossteile geöffnet werden. Nicht unwesentlich für dieses Kettenschloss ist, dass der Sicherungsbolzen mehrfach verwendet werden kann, mithin mehrfach zum Verriegeln der beiden Schlossteile eingesetzt und auch aus dem Sicherungsbolzensitz wieder ausgetrieben werden kann, ohne dass eine Beeinträchtigung seiner Funktionalität zu befürchten wäre. Auch wenn gemäß einem Ausführungsbeispiel Kugeln als Druckkörper verwendet werden, können diese auch andere geometrische Formen aufweisen, solange diese innerhalb der Druckkörperdurchbrechungen unter Vorspannung gestellt und/oder zum Erzielen eines Formschlusses mit dem zweiten Bolzenglied verstellt werden können. Besonders Druckkörper mit einer rotationssymmetrischen äußeren Mantelfläche, insbesondere solche, die in ihrem mittleren Abschnitt eine Aussparung aufweisen, damit die Druckkörper innerhalb einer Druckkörperdurchbrechung formschlüssig gehalten werden können, sind hierfür geeignet. In radialer Verstellrichtung bzw. in Richtung des Aufbringens der Vorspannung sind die Druckkörper bei einer solchen Ausgestaltung nur lose innerhalb einer solchen Druckkörperdurchbrechung gehalten.

Die Anschlagflächen des Sicherungsbolzensitzes sind vorzugsweise rechtwinkelig zur Längsachse des Sicherungsbolzensitzes ausgerichtet. Bereitgestellt werden können diese durch Vorsehen eines mittleren Abschnitts des Sicherungsbolzensitzes, der gegenüber den angrenzenden äußeren Abschnitten einen reduzierten Durchmesser aufweist.

Als Sicherungsstift können beispielsweise ein Spannbolzen oder auch eine Spannhülse dienen.

Bevorzugt ist eine Ausgestaltung des zweiten Bolzengliedes, dass die Druckkörper in dessen nach innen zur Mantelfläche des Anschlussabschnittes des ersten Bolzengliedes weisende Mantelfläche eine Druckkörperausnehmung aufweist, in die die aktivierten Druckkörper eingreifen. Eine solche Druckkörperausnehmung ist vorzugsweise als umlaufende Nut ausgeführt.

Die Druckkörper sind in dem Anschlussabschnitt des ersten Bolzengliedes in Umfangsrichtung typischerweise mit gleichem Winkelabstand voneinander angeordnet. Abhängig von dem zur Verfügung stehenden Durchmesser werden typischerweise drei oder mehr Druckkörper verwendet. In vielen Fällen wird man den Sicherungsbolzen mit vier Druckkörpern auslegen.

In einer bevorzugten Ausgestaltung sitzt das zweite Bolzenglied insgesamt auf dem Anschlussabschnitt des ersten Bolzengliedes. Die äußere längsseitige Endfläche des zweiten Bolzengliedes fluchtet sodann mit der Stirnfläche des Anschlussabschnittes des ersten Bolzengliedes. Um für das zweite Bolzenglied einen Montageanschlag am ersten Bolzenglied auszubilden, ist gemäß einem Ausführungsbeispiel vorgesehen, dass die äußere Mantelfläche des Anschlussabschnittes des ersten Bolzengliedes einen gegenüber dem angrenzenden Abschnitt reduzierten Durchmesser aufweist. Der Innendurchmesser des zweiten Bolzenglieds ist an seiner zu dem ersten Bolzenglied weisenden Seite dann dergestalt ausgeführt, dass die diesbezügliche Stirnfläche des zweiten Bolzengliedes mit ihrem inneren Abschnitt an dem Absatz des ersten Bolzengliedes im Übergang von seinem Anschlussabschnitt in den benachbarten Abschnitt anschlägt.

Nachfolgend ist die Erfindung unter Bezugnahme auf die Figuren erläutert. Es zeigen:
- **Fig. 1:**: Eine Seitenansicht eines erfindungsgemäßen Kettenschlosses,
- **Fig. 2:**: eine perspektivische Darstellung des Kettenschlosses der Figur 1 mit seinem Sicherungsbolzen nach Art einer Explosionsdarstellung,
- **Fig. 3:**: der Sicherungsbolzen des Kettenschlosses der vorstehenden Figuren mit seinen beiden aneinander montierten Bolzengliedern vor ihrer Verriegelung miteinander,
- **Fig. 4:**: der Sicherungsbolzen des Kettenschlosses der vorstehenden Figuren mit seinen beiden aneinander montierten Bolzengliedern nach ihrer Verriegelung miteinander,
- **Fig. 5:**: einen Querschnitt des Kettenschlosses der Figur 1 mit seinen beiden in Eingriff gestellten Schlossteilen ohne montiertem Sicherungsbolzen und
- **Fig. 6:**: einen Querschnitt des Kettenschlosses aus Figur 1 mit seinen beiden in Eingriff gestellten Schlossteilen mit dem zum Verriegeln der beiden Schlossteile montierten Sicherungsbolzen.

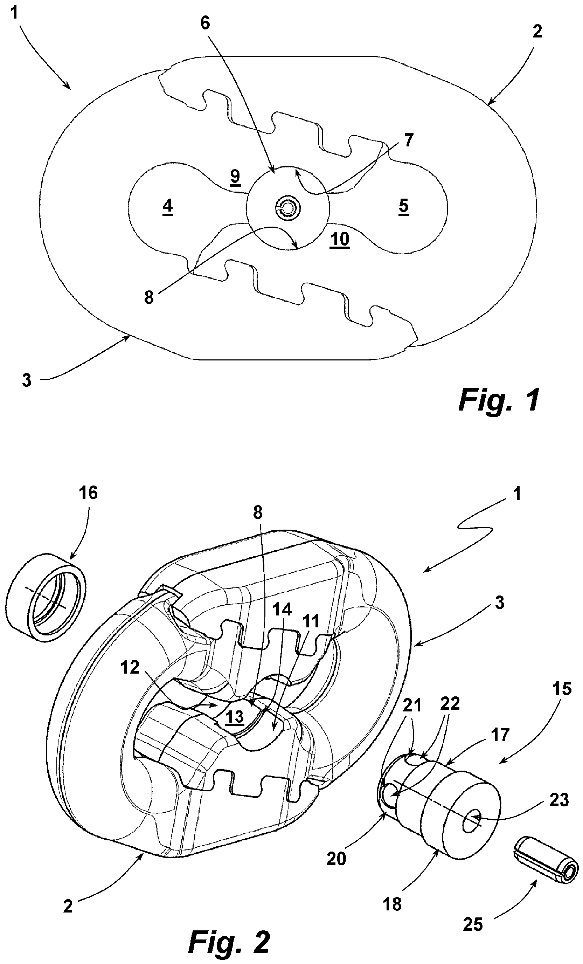

Ein Kettenschloss 1 zum Verbinden von zwei Kettengliedern, typischerweise zweier Kettengliedstränge, umfasst zwei identische Schlossteile 2, 3. Die Teilungsebene des Kettenschlosses 1 bezüglich seiner zwei Schlossteile 2, 3 liegt innerhalb der die Bögen verbindenden Schenkel des Kettenschlosses 1. Die beiden Schlossteile 2, 3 sind in Zugbelastungsrichtung des Kettenschlosses 1 klauenartig in an sich bekannter Weise miteinander in Eingriff gestellt. Durch jedes Schlossteil 2, 3 ist ein Innenraum 4 bzw. 5 eingefasst. In diese werden die mit dem Kettenschloss 1 zu verbindenden Kettenglieder eingehängt, bevor die beiden Schlossteile 2, 3 in ihre in Figur 1 gezeigte Ineingriffstellung gebracht worden sind. Zum Sichern dieser Ineingriffstellung der beiden Schlossteile 2, 3 dient ein insgesamt mit den Bezugszeichen 6 gekennzeichneter Sicherungsbolzen. Der Sicherungsbolzen 6 greift mit seiner Mantelfläche jeweils in einen Sicherungsbolzensitz 7, 8 jedes Schlossteils 2, 3 ein. Die beiden Sicherungsbolzensitze 7, 8 sind spiegelsymmetrisch in Bezug auf die Querebene zur Flachseite des Kettenschlosses 1 ausgeführt und ergänzen sich zu einem gemeinsamen Sicherungsbolzensitz. Die Sicherungsbolzensitze 7, 8 sind vom Prinzip her als konkave Vertiefungen in die zueinander weisenden Innenseiten der Schenkelteile 9 bzw. 10 der beiden Schlossteile 2, 3 eingebracht. Durch die Innenseiten der Schenkelteile 9, 10 ist der Innenraum des Kettenschlosses 1 begrenzt. Die Auslegung des Sicherungsbolzensitzes 8 ist in der perspektivischen Darstellung des Kettenschlosses 1 der Figur 2 erkennbar. Dieselben Ausführungen gelten gleichermaßen für den dem Schlossteil 2 zugehörigen Sicherungsbolzensitz 7. Der Sicherungsbolzensitz 8 verfügt über zwei äußere Abschnitte 11, 12 und einen zwischen den beiden äußeren Abschnitten 11, 12 befindlichen mittleren Abschnitt 13. Die drei Abschnitte 11, 12, 13 haben jeweils eine zylindrische Mantelfläche. Der Radius der äußeren Abschnitte 11, 12 ist etwas größer als der Radius des mittleren Abschnittes 13, weshalb der lichte Durchmesser des aus den beiden Sicherungsbolzensitzen 7, 8 gebildeten Sitzes im Bereich der mittleren Abschnitte 13 kleiner ist als in den äußeren Abschnitten 11, 12. Durch den Übergang von den äußeren Abschnitten 11, 12 in den mittleren Abschnitt 13 ist jeweils eine Anschlagfläche 14 ausgebildet. Bei dem dargestellten Ausführungsbeispiel ist die Ebene der Anschlagfläche 14 rechtwinkelig zur Längsachse des aus den Sicherungsbolzensitzen 7, 8 gebildeten Sitzes für den Sicherungsbolzen 6 angeordnet.

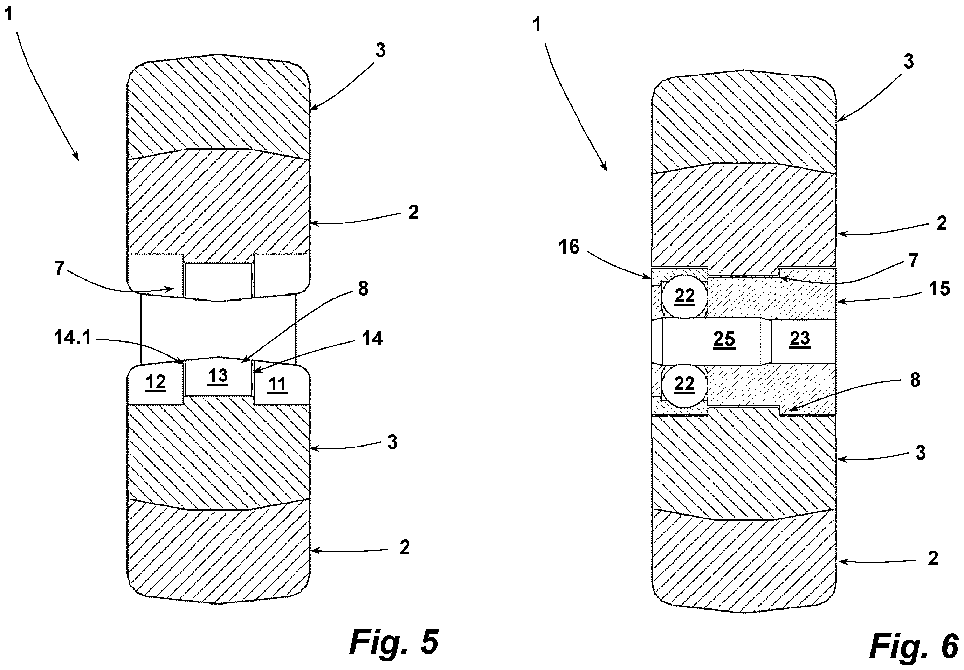

Die vorbeschriebene Auslegung des Sicherungsbolzensitzes 8 und die entsprechende Auslegung des Sicherungsbolzensitzes 7 der beiden Schlossteile 2, 3 ist in der Schnittdarstellung der Figur 5 entnehmbar. Die rückwärtige, in Figur 2 nicht erkennbare Anschlagfläche ist in Figur 5 mit dem Bezugszeichen 14.1 kenntlich gemacht.

Der Sicherungsbolzen 6 verfügt, wie aus der Explosionsdarstellung der Figur 2 erkennbar, über zwei Bolzenglieder 15, 16. Das im Rahmen dieser Ausführungen auch als erstes Bolzenglied 15 angesprochene Bolzenglied durchgreift den Sicherungsbolzensitz 7, 8 des Kettenschlosses 1 insgesamt. Das erste Bolzenglied 15 verfügt über einen mittleren Abschnitt 17. Dieser ist gegenüber einem angrenzenden Kopfabschnitt 18 mit einem reduzierten Durchmesser ausgeführt. Der Übergang von dem mittleren Abschnitt 17 in den Kopfabschnitt 18 bildet einen Anschlag 19, der mit der zu dem ersten Bolzenglied 15 weisenden Anschlagfläche 14 der Sicherungsbolzensitze 7, 8, zusammenwirkt. Damit ist die Eingreiftiefe des ersten Bolzengliedes 15 in den hierfür vorgesehenen Sitz des Kettenschlosses 1 definiert. Dem Kopfabschnitt 18 gegenüberliegend umfasst das erste Bolzenglied 15 einen Anschlussabschnitt 20. Der Anschlussabschnitt 20 weist wiederum einen gegenüber dem mittleren Abschnitt 17 reduzierten Durchmesser seiner äußeren Mantelfläche auf. In den Anschlussabschnitt 20 sind mehrere, in Umfangsrichtung mit gleichem Winkelabstand zueinander angeordnete Druckkörperdurchbrechungen 21 eingebracht. In jeder Druckkörperdurchbrechung 21 befindet sich als Druckkörper eine Kugel 22. Bei dem dargestellten Ausführungsbeispiel sind insgesamt vier Druckkörperdurchbrechungen 21 jeweils einer Kugel 22 als Druckkörper vorgesehen. Das erste Bolzenglied 15 verfügt zudem über einen Axialkanal 23, der das erste Bolzenglied 15 insgesamt in Richtung seiner Längsachse durchgreift.

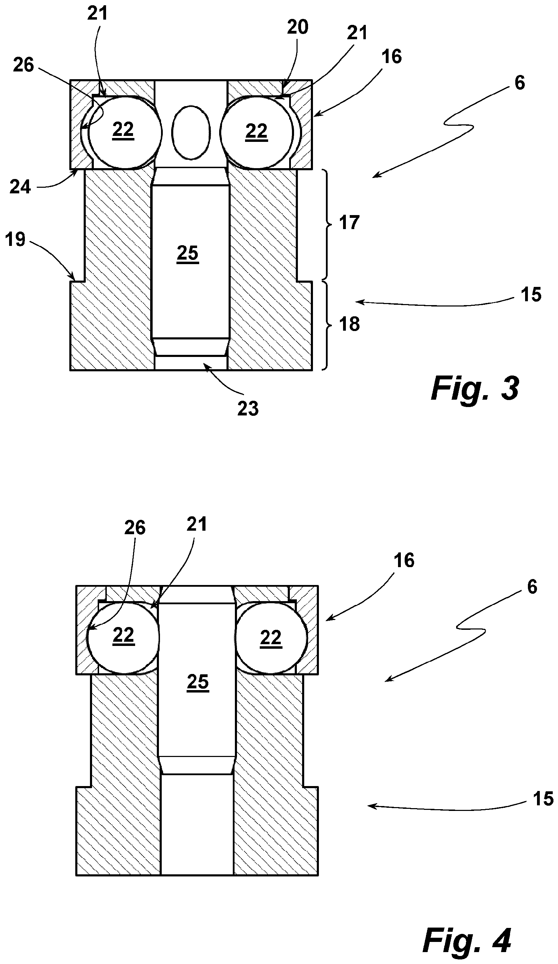

Das zweite Bolzenglied 16 ist als Hülse ausgeführt und ausgelegt, auf den Anschlussabschnitt 20 des ersten Bolzengliedes aufgeschoben werden zu können. Figur 3 zeigt in einem Längsschnitt den zusammengesetzten Sicherungsbolzen 6, bei dem das zweite Bolzenglied 16 auf den Anschlussabschnitt 20 des ersten Bolzengliedes 15 aufgeschoben ist. Aufgrund des reduzierten Durchmessers des Anschlussabschnittes 20 gegenüber dem angrenzenden mittleren Abschnitt 17 ist ein sitzseitiger Anschlag gebildet, gegen den die zu dem ersten Bolzenglied 15 weisende Stirnfläche anschlägt. Dadurch ist die Montageposition des zweiten Bolzengliedes 16 auf dem Bolzenglied 15 definiert.

Aus der Längsschnittdarstellung der Figur 3 sind auch die als Druckkörper eingesetzten Kugeln 22 erkennbar, die jeweils in einer Druckkörperdurchbrechung 21 sitzen. Die Druckkörperdurchbrechungen 21 verjüngen sich in Richtung zum Axialkanal 23 hin, in den diese münden. Die Kugeln 22 ragen mit einem Abschnitt in den Axialkanal 23 ein. Gehalten sind die Kugeln 22 in ihrer jeweiligen Druckköperdurchbrechung 21, sodass diese in radialer Richtung auch bei abgenommenem zweiten Bolzenglied 16 aus diesen Durchbrechungen 21 nicht herausfallen.

Dem Sicherungsbolzen 6 zugehörig ist des Weiteren eine Spannhülse 25. Diese befindet sich vormontiert in dem Axialkanal 23 des ersten Bolzengliedes 15 außerhalb seines Anschlussabschnittes 20. Zum formschlüssigen Anschließen des zweiten Bolzengliedes 16 an das erste Bolzenglied 15 entgegen der Montagerichtung des zweiten Bolzengliedes 16 auf das erste Bolzenglied 15 ist die innere Mantelfläche des zweiten Bolzengliedes 16 mit einer Druckkörperausnehmung 26 ausgeführt. Da es sich bei den Druckkörpern um Kugeln 22 handelt, ist die umlaufend vorgesehene Druckkörperausnehmung 26 entsprechend konkav ausgeführt. In diese werden die Kugeln 22 mittels der Sicherungshülse 25, die dadurch in radialer Richtung nach außen hin verstellt werden, um den gewünschten Formschluss zwischen den beiden Bolzengliedern 15, 16 herbeizuführen. Die Spannhülse 25 befindet sich im Axialkanal 23 unter Vorspannung stehend und ist dadurch unverlierbar in dem Axialkanal 23 gehalten.

Figur 6 zeigt das Kettenschloss 1 in einer Darstellung entsprechend Figur 5 zusätzlich mit dem an seinen Sicherungsbolzensitzen 7, 8 anliegenden Sicherungsbolzen 6. Der formschlüssige Anschluss des Sicherungsbolzens 6 durch die von entgegengesetzten Seiten montierten Bolzenglieder 15, 16 und die dadurch bewirkte Einfassung des mittleren Abschnittes 13 der Sicherungsbolzensitze 7, 8 ist dieser Figur gut zu erkennen. Durch den Sicherungsbolzen 6 sind die beiden Schlossteile 2, 3 sicher dauerhaft miteinander verbunden.

Soll das Kettenschloss 1 geöffnet werden, wird in einem ersten Schritt die Spannhülse 25 aus ihrer eine Verstellbarkeit der als Druckkörper dienenden Kugeln 22 blockierenden Stellung innerhalb des Axialkanals 23 herausgetrieben. Anschließend kann von derselben Seite des Kettenschlosses 1 das erste Bolzenglied 15 aus den sich ergänzenden Sicherungsbolzensitzen 7, 8 herausgeschlagen werden. Dann braucht nur noch das zweite Bolzenglied 16 von den Sicherungsbolzensitzen 7, 8 abgenommen werden. Anschließend können die beiden Schlossteile 2, 3 gegeneinander zum Öffnen des Kettenschlosses 1 verstellt werden.

Die Bestandteile des Sicherungsbolzens 6 sind typischerweise materialidentisch, um Kontaktkorrosionserscheinungen zu reduzieren. Dieses ist jedoch nicht zwingend erforderlich. Auch ein Einsatz von Kunststoffteilen zum Verhindern eines korrosiven Zusammenbackens der Teile des Sicherungsbolzens 6 ist bei dem beschriebenen Kettenschloss grundsätzlich nicht erforderlich.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Kettenschloss
- 2, 3: Schlossteil
- 4, 5: Innenraum
- 6: Sicherungsbolzen
- 7, 8: Sicherungsbolzensitz
- 9, 10: Schenkelteil
- 11, 12: äußerer Abschnitt
- 13: mittlerer Abschnitt
- 14, 14.1: Anschlagfläche
- 15: erstes Bolzenglied
- 16: zweites Bolzenglied
- 17: mittlerer Abschnitt
- 18: Kopfabschnitt
- 19: Anschlag
- 20: Anschlussabschnitt
- 21: Druckkörperdurchbrechung
- 22: Kugel
- 23: Axialkanal
- 24: Stirnfläche
- 25: Spannhülse
- 26: Druckkörperausnehmung

## Patentansprüche

1. Kettenschloss für eine Gliederkette mit zwei in Zugbelastungsrichtung des Kettenschlosses (1) formschlüssig miteinander in Eingriff gestellten Schlossteilen (2, 3), die an ihren zueinander weisenden, den Innenraum des Kettenschlosses (1) begrenzenden Innenseiten jeweils einen Sitz (7, 8) mit einer in Querrichtung zur Ebene der Flachseite des Kettenschlosses (1) wirkenden Anschlagfläche (14, 14.1) für einen darin eingesetzten Sicherungsbolzen (6) aufweisen, und mit einem solchen Sicherungsbolzen (6), der, in Querrichtung zur Ebene der Flachseite des Kettenschlosses (1) montiert, in die einander gegenüberliegenden Sitze (7, 8) der beiden Schlossteile (1, 2) zum Verriegeln derselben eingreift, welcher Sicherungsbolzen (6) ein erstes und ein zweites Bolzenglied (15, 16) aufweist, die, von gegenüberliegenden Flachseiten des Kettenschlosses (1) montiert, miteinander verbunden sind und von denen jedes Bolzenglied (15, 16) einen in Querrichtung zur Ebene der Flachseite des Kettenschlosses (1) mit einer Anschlagfläche (14, 14.1) des Sicherungsbolzensitzes zusammenwirkenden Anschlag (19) aufweist, **dadurch gekennzeichnet, dass** sich das erste Bolzenglied (15) ausgehend von seinem mit der Anschlagfläche (14) des Sicherungsbolzensitzes (7, 8) zusammenwirkenden Anschlag (19) über die weitere Anschlagfläche (14.1) des Sicherungsbolzensitzes (7, 8) hinaus erstreckt und der über die zweite Anschlagfläche (14.1) hinaus erstreckende Abschnitt als Anschlussabschnitt (20) zum Anschließen des zweiten Bolzengliedes (16) vorgesehen ist, dass das erste Bolzenglied (15) einen Axialkanal (23) aufweist, dass in den Anschlussabschnitt (20) des ersten Bolzengliedes (15) mehrere, in radialer Richtung verstellbare jeweils in einer in den Axialkanal (23) mündenden Durchbrechung (21) angeordnete Druckkörper (22) gehalten sind, deren radiale Erstreckung größer ist als die radiale Erstreckung einer solchen Drucckörperdurchbrechung (21), dass das zweite Bolzenglied (16) zumindest in seinem Anschlussabschnitt als auf den Anschlussabschnitt (20) des ersten Bolzengliedes (15) aufschiebbare Hülse ausgeführt ist und dass in den Axialkanal (23) ein Sicherungsstift (25) eingesetzt ist, durch den bei montiertem zweiten Bolzenglied (16) die Druckkörper (22) in radialer Richtung zum Verspannen derselben in radialer Richtung mit dem zweiten Bolzenglied (16) unter Vorspannung und/oder formschlüssig mit der nach innen weisenden Mantelfläche des zweiten Bolzengliedes (16) in Eingriff gestellt sind.

2. Kettenschloss nach Anspruch 1, **dadurch gekennzeichnet, dass** die Druckkörper eine ihre Längsachse einfassende, rotationssymmetrische Mantelfläche mit einer Ausbauchung in ihrem mittleren Abschnitt aufweisen.

3. Kettenschloss nach Anspruch 1, **dadurch gekennzeichnet, dass** der Sicherungsbolzen (6) als Druckkörper Kugeln (22) aufweist.

4. Kettenschloss nach einem der Ansprüche 1 bis 3, **dadurch gekennzeichnet, dass** die Druckkörper (22) in radialer Richtung formschlüssig in den jeweiligen Druckkörperdurchbrechungen (21) des Anschlussabschnittes (20) des ersten Bolzengliedes (15) gehalten sind.

5. Kettenschloss nach einem der Ansprüche 1 bis 4, **dadurch gekennzeichnet, dass** die Druckkörper (22) in radialer Richtung zum Verspannen derselben mit dem zweiten Bolzenglied (16) durch den zwischen die Druckkörper (22) eingetriebenen Sicherungsstift (25) verstellbar sind.

6. Kettenschloss nach einem der Ansprüche 1 bis 5, **dadurch gekennzeichnet, dass** das zweite Bolzenglied (16) an seiner zum Anschlussabschnitt (20) des ersten Bolzengliedes (15) weisenden Innenseite eine umlaufende, nach Art einer Nut ausgebildete Drucckörperaufnahme (26) aufweist.

7. Kettenschloss nach einem der Ansprüche 1 bis 6, **dadurch gekennzeichnet, dass** der Durchmesser der Mantelfläche des Anschlussabschnittes (20) des ersten Bolzengliedes (15) gegenüber dem daran angrenzenden Abschnitt (17) reduziert ist und durch den Übergang von dem Anschlussabschnitt (20) in den benachbarten Abschnitt (17) ein stirnseitiger Anschlag für das zweite Bolzenglied (16) gebildet ist.

8. Kettenschloss nach einem der Ansprüche 1 bis 7, **dadurch gekennzeichnet, dass** der Sicherungsbolzensitz (7, 8) einen zentralen, im Durchmesser gegenüber seinen Endabschnitten (11, 12) reduzierten Abschnitt (13) aufweist und durch den Übergang von den Endabschnitten in den mittleren Abschnitt (13) jeweils eine Anschlagfläche (14, 14.1) bereitgestellt ist.

9. Kettenschloss nach Anspruch 8, **dadurch gekennzeichnet, dass** die Anschlagflächen (14, 14.1) rechtwinklig zur Längsachse des Sicherungsbolzensitzes (7, 8) angeordnet sind.

10. Kettenschloss nach einem der Ansprüche 1 bis 9, **dadurch gekennzeichnet, dass** der Sicherungsstift als Bolzen ausgeführt ist.

11. Kettenschloss nach einem der Ansprüche 1 bis 10, **dadurch gekennzeichnet, dass** der Sicherungsstift eine Spannhülse (25) ist, die mit einem Abschnitt gegen die Druckkörper (22) und mit einem anderen Abschnitt gegen die Innenwand des Axialkanals (23) wirkt.

12. Kettenschloss nach einem der Ansprüche 1 bis 11, **dadurch gekennzeichnet, dass** die beiden Bolzenglieder (15, 16) des Sicherungsbolzens (6) aus einem Stahlwerkstoff hergestellt sind.

13. Kettenschloss nach einem der Ansprüche 1 bis 12, **dadurch gekennzeichnet, dass** die Druckkörper (22) aus demselben Material hergestellt sind, wie die beiden Bolzenglieder (15, 16).

14. Sicherungsbolzen für ein Kettenschloss (1) für eine Gliederkette mit zwei in Zugbelastungsrichtung des Kettenschlosses (1) formschlüssig miteinander in Eingriff gestellten Schlossteilen (2, 3), die an ihren zueinander weisenden, den Innenraum des Kettenschlosses (1) begrenzenden Innenseiten jeweils einen Sitz mit einer in Querrichtung zur Ebene der Flachseite des Kettenschlosses (1) wirkenden Anschlagfläche (14, 14.1) für einen darin eingesetzten Sicherungsbolzen (6) aufweisen, welcher Sicherungsbolzen (6) ein erstes und ein zweites Bolzenglied (15, 16) aufweist, die miteinander verbindbar sind und von denen jedes Bolzenglied (15, 16) einen in Querrichtung zur Ebene der Flachseite des Kettenschlosses (1) mit einer Anschlagfläche (14, 14.1) des Sicherungsbolzensitzes zusammenwirkenden Anschlag (19) aufweist, **dadurch gekennzeichnet, dass** sich das erste Bolzenglied (15) ausgehend von seinem mit der Anschlagfläche (14) des Sicherungsbolzensitzes (7, 8) zusammenwirkenden Anschlag (19) über die weitere Anschlagfläche (14.1) des Sicherungsbolzensitzes (7, 8) hinaus erstreckt und der über die zweite Anschlagfläche (14.1) hinaus erstreckende Abschnitt als Anschlussabschnitt (20) zum Anschließen des zweiten Bolzengliedes (16) vorgesehen ist, dass das erste Bolzenglied (15) einen Axialkanal (23) aufweist, dass in den Anschlussabschnitt (20) des ersten Bolzengliedes (15) mehrere, in radialer Richtung verstellbare jeweils in einer in den Axialkanal (23) mündenden Durchbrechung (21) angeordnete Druckkörper (22) gehalten sind, deren radiale Erstreckung größer ist als die radiale Erstreckung einer solchen Druckkörperdurchbrechung (21), dass das zweite Bolzenglied (16) zumindest in seinem Anschlussabschnitt als auf den Anschlussabschnitt (20) des ersten Bolzengliedes (15) aufschiebbare Hülse ausgeführt ist und dass in den Axialkanal (23) ein Sicherungsstift (25) eingesetzt ist, durch den bei montiertem zweiten Bolzenglied die Druckkörper (22) in radialer Richtung zum Verspannen derselben in radialer Richtung mit dem zweiten Bolzenglied (16) unter Vorspannung und/oder formschlüssig mit der nach innen weisenden Mantelfläche des zweiten Bolzengliedes (16) in Eingriff gestellt sind.

15. Sicherungsbolzen nach Anspruch 14, **dadurch gekennzeichnet, dass** dieser ein oder mehrere, den Sicherungsbolzen (6) betreffende Merkmale der Ansprüche 2 bis 13 aufweist.
